## Europäisches Patentamt

## European Patent Office

## Office européen des brevets

(19)

(11) Publication number: **0 084 459**

**B1**

(12) # EUROPEAN PATENT SPECIFICATION

(45) Date of publication of patent specification: **13.08.86**

(51) Int. Cl.⁴: **H 04 N 1/00**

(21) Application number: **83300246.2**

(22) Date of filing: **19.01.83**

(54) Facsimile system.

(30) Priority: **20.01.82 JP 6129/82**

(43) Date of publication of application:
**27.07.83 Bulletin 83/30**

(45) Publication of the grant of the patent:
**13.08.86 Bulletin 86/33**

(84) Designated Contracting States:
**DE FR GB**

(56) References cited:
**GB-A-2 062 402**
**US-A-3 643 016**

**PATENTS ABSTRACTS OF JAPAN, vol. 6, no. 222(E-140)(1100), 6th November 1982; & JP - A - 57 124 966 (CANON K.K.) 04-08-1982
THE INTERNATIONAL TELEGRAPH AND TELEPHONE CONSULTATIVE COMMITTEE, YELLOW BOOK, vol. VII - fascicle VII.2, Telegraph and telematic services terminal equipment, International Telecommunication Union, pages 222-235, Geneva, CH; "Standardization of group 3 facsimile apparatus for document transmission"**

(73) Proprietor: **FUJI XEROX CO., LTD.**
**No. 3-5, Akasaka 3-chome**
**Minato-ku Tokyo 107 (JP)**

(72) Inventor: **Yamamoto, Yadashi**
**Fuji Xerox Co. Ltd. Ebina Works No. 2274, Hongo Ebina-shi Kanagawa (JP)**
Inventor: **Moriguchi, Haruhiko**
**Fuji Xerox Co. Ltd. Ebina Works No. 2274, Hongo Ebina-shi Kanagawa (JP)**

(74) Representative: **Evershed, Michael et al**
**Marks & Clerk Alpha Tower Suffolk Street Queensway**
**Birmingham B1 ITT (GB)**

Courier Press, Leamington Spa, England.

## Description

This invention relates to a facsimile communication system, in which the video signal read by scanning an original image on the transmitting side is transmitted to a facsimile device on the receiving side.

In a facsimile communication system, an image is read by sequential scanning (or raster scanning) and transmitted as a video signal in a line format. Therefore, in the system, the recording speed at the signal receiving side is one of the factors which determine the transmission time.

Consider first the case where the facsimile device on the signal receiving side records images in a thermal recording system. In the thermal recording system, it is necessary to provide a relatively large capacity power source for driving the thermal head. Therefore, in a facsimile device having a relatively small capacity power source, the thermal head is driven in a divisional manner, the number of divisions required for each line depending on its "black rate $B_R$". The "Black rate $B_R$" of a line is defined herein as the proportion of bits to be printed (hereinafter referred to as "black bits") present in the video signal for the line. In such a facsimile device, the black rate $B_R$, the number of divisions per line required for driving the thermal head, and the recording time required for each line are correlated as shown in Table 1. The facsimile device, in this case, employs a blank line skipping system in which the recording operation is omitted for lines which include no black bits.

Therefore, when the black rate $B_R$ is 0%, no data is indicated for the number of divisions in Table 1.

TABLE 1

| Black rate (%) | Number of division | Recording time per line |
|---|---|---|
| | | (ms/line) |
| $B_R=0$ | — | 2.5 |
| $0<B_R\leqq25$ | 1 | 5.0 |
| $25<B_R\leqq100$ | 4 | 10.0 |

In transmitting video signals to the facsimile device on the signal receiving side, heretofore the maximum recording time for a line is employed as the minimum transmission time. For instance in the facsimile of Table 1, 10 ms is employed as the minimum transmission time for transmitting the video signals of each line. This is to avoid the problem where the signal transmitting side transmits the video signal before the signal receiving side starts the recording operation. Accordingly, in such a system, when the transmission time of the video signal of a line is shorter than the minimum transmission time, a train of fill bits is inserted in the blank part of the transmission time in transmitting the video signal. However, the system is deficient in that, when the recording time for a line is short, the black rate being low, the transmission time cannot be decreased, i.e., the efficiency of transmission of the video signal is low.

In the International Telegraph and Telephone Consultative Committee Yellow Book, Volume VII—Fascicle VII.2, November 1980, pages 222—235, facsimile communication systems are discussed in which a minimum recording time is established during a pre-message control procedure. This minimum recording time is then held constant during message transmission and is not varied according to the black rate. Consequently, transmission time cannot be decreased whilst the message is being transmitted and so the efficiency of transmission of the video signal is low.

An object of this invention is to provide a facsimile system in which the above mentioned problem is overcome.

According to this invention there is provided a facsimile communication system wherein transmission is carried out such that, when the time of transmission of the video signal for a video line provided by scanning an original image is shorter than that required by a facsimile device on the signal receiving side, fill bits are transmitted in succession with the video signal so that the time of transmission of each line is adjusted to that required by the facsimile device on the signal receiving side, said system including means on the signal transmitting side for discriminating the period of time required by the facsimile device on the signal receiving side to record the video signal for each line to be transmitted, a reading section for scanning successive lines of an original to be transmitted, a coding section for transmission of said video signal and means for initiating the scanning of each line and employing the period of time discriminated as the minimum time of transmission, characterized in that said discriminating means discriminates the period of time required to record the video signal for each line to be transmitted as a function of its video content and said initiating means comprises a reading control section receiving as a first input the output signal from said discriminating means, and a counting section for determining the video content of each successive line being transmitted and producing an output which is indicative of the video content of each line being transmitted and which is provided as a second input to the reading control section, said reading control section producing an output to said reading section to initiate the scanning of each line a predetermined period following initiation of the scanning of the previous line, said predetermined period being a function of the recording time for said previous line in said facsimile device on the receiving side.

With the facsimile communication system of this invention, the transmission time of each line is varied in accordance with its black rate and so the efficiency of transmission is increased in comparison with the prior art systems discussed hereinbefore.

This invention will now be described in more detail, by way of example, with reference to the accompanying drawings, in which:—

Figure 1 is an explanatory diagram showing the black rates of lines on the original; and

Figure 2 is a block diagram showing the components of the transmitting side of a facsimile system embodying this invention.

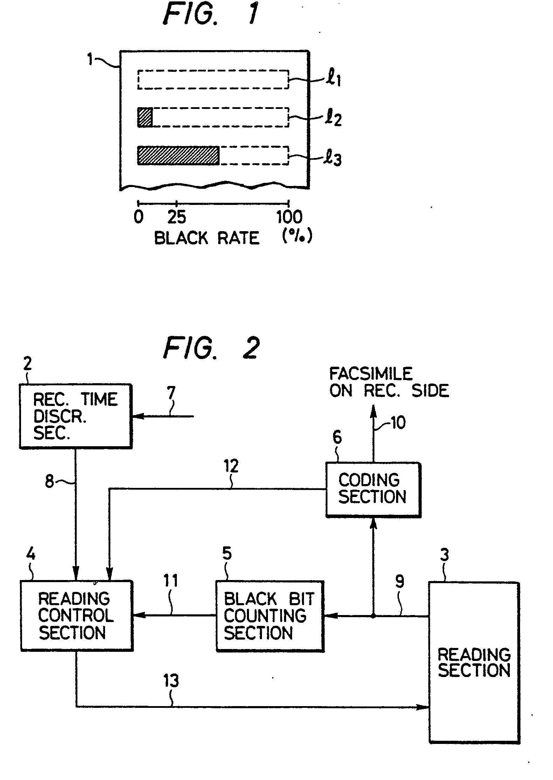

Figure 1 illustrates the black rates of lines on the original 1, by way of example. No black bits exists on the first line $l_1$ of the original, and therefore the black rate of the first line $l_1$ is 0%. The second line $l_2$ includes a small number of black bits (corresponding to the shaded part), and its black rate is 10%. The third line $l_3$ includes a large number of black bits, and its black rate is 55%. When a facsimile device on the signal receiving side performs a recording operation with the numbers of division indicated in Table 1 above, the recording times for the lines $l_1$, $l_2$ and $l_3$ are as listed in Table 2:

TABLE 2

| Line | Recording time |
|------|----------------|
| (ms/line) | |
| $l_1$ | 2.5 |
| $l_2$ | 5.0 |
| $l_3$ | 10.0 |

Figure 2 shows the components of a facsimile device on the signal transmitting side, which is adapted to transmit the video signal of the original in accordance with this invention. The facsimile device on the signal transmitting side comprises a recording time discriminating section 2 for discriminating the recording time of each line of a facsimile device on the signal receiving side, a reading control section 4 for initiating instructions for the start of reading a line in a reading section 3, a black bit counting section 5 for counting black bits in the video signal of each line which is outputted by the reading section 3, and an encoding section 6 for encoding the video signal.

When a call mode is established between the transmitting facsimile device and the receiving facsimile device, the apparatus number of the receiving facsimile device is inputted to the recording time discriminating section 2 on line 7. The recording time discriminating section 2 has an ROM (read-only memory) in which the apparatus numbers of various facsimile devices and the one-line recording times (minimum transmission times) of those facsimiles have been stored. Therefore, when the apparatus number is inputted, the one-line recording time corresponding to that particular facsimile device is read out using the apparatus number as address data. The recording time data 8 which is read out as described above is applied to the reading control section 4. In this case, the receiving facsimile device has three different recording times as indicated in Table 2. Therefore, these recording times are inputted to the reading control section 4 together with their respective black rates $B_R$ and are stored therein.

When predetermined initialization procedures, for instance phase synchronization, have been accomplished before transmission of the video signal, the reading section 3 reads the first line $l_1$ with predetermined timing. Consequently, the serial video signal 9 for one line which has been binary coded is outputted by the reading section 3. The video signal 9 is applied to the coding section 6, where it is encoded for blank line skipping and it is modulated, and then transmitted as a facsimile signal 10 to the receiving facsimile.

The video signal 9 is further applied to the black bit counting section 5. The black bit counting section 5 counts the black bits of the first line $l_1$ and applies a black rate signal 11 representative of the black rate to the reading control section 4. Upon reception of the black rate signal 11, the reading control section 4 discriminates the recording time corresponding to this black rate and allows a counter incorporated therein to measure the recording time. From Table 2, the recording time of the first line $l_1$ is 2.5 ms. In the reading control section 4, the recording time (2.5 ms) measurement completion signal which is provided by the counter and the coding completion signal 12 which is provided by the encoding section 6 are ANDed. Therefore, when the two signals are applied to the reading control section 4, this section outputs a reading start signal 13, which is applied to the reading section 3. As a result, the reading section 3 starts reading the second line $l_2$ 2.5 ms after reading the first line $l_1$ started.

The video signal 9 of the second line $l_2$ is outputted by the reading section 3 and is coded into a facsimile signal 10 by the encoding section 6 which is transmitted to the signal receiving side. At the same time, the black bit counting section 5 counts the black bits of the second line $l_2$, and outputs a black rate signal 11 representing a black rate of 10%. In the reading control section 4, according to the black rate signal 11 thus outputted the recording time of 5.0 ms is measured by the counter. If the facsimile signal 10 which is provided by encoding the video data of the line $l_2$ is transmitted within 5.0 ms, the reading start signal 13 is outputted immediately when the measurement by the counter is accomplished. In this case, the encoding section 6 outputs fill bits in the blank time after encoding the video data has been achieved. If the facsimile signal 10 which is provided by encoding the video data of the line $l_2$ is transmitted for more than 5.0 ms, the reading start signal 13 is outputted immediately when the transmission is accomplished. In this case, the video signal to be encoded is supplied to the encoding section 6 immediately, and therefore no fill bits are inserted.

When the reading start signal 13 is supplied to the reading section 3, this section starts reading the third line $l_3$. The black rate of the third line $l_3$ is 55%, and the counter in the reading control section 4 measures the recording time of 10 ms. In the encoding section 6, the video signal 9 from the reading section 3 is encoded, and if it is transmitted as the facsimile signal 10 within 10.0 ms, the fill bits are outputted in the blank time. In this case, after 10.0 ms has passed, the next reading start signal 13 is outputted.

If the time of transmission is more than 10.0 ms, the next reading start signal 13 is outputted when the transmission is accomplished. Similarly, the video data are transmitted with the minimum transmission time being changed according to the black rate.

As is apparent from the above description, according to the invention, minimum transmission times are provided individually for the lines according to the recording speed at the signal receiving side. Accordingly, for an original having a small black rate, the recording time can be considerably decreased.

**Claims**

1. A facsimile communication system wherein transmission is carried out such that, when the time of transmission of the video signal for a video line provided by scanning an original image is shorter than that required by a facsimile device on the signal receiving side, fill bits are transmitted in succession with the video signal so that the time of transmission of each line is adjusted to that required by the facsimile device on the signal receiving side, said system including means (2) on the signal transmitting side for discriminating the period of time required by the facsimile device on the signal receiving side to record the video signal for each line to be transmitted, a reading section (3) for scanning successive lines of an original to be transmitted, a coding section (6) for transmission of said video signal, and means (4, 5) for initiating the scanning of each line and employing the period of time discriminated as the minimum time of transmission, characterized in that said discriminating means (2) discriminates the period of time required to record the video signal for each line to be transmitted as a function of its video content and said initiating means (4, 5) comprises a reading control section (4) receiving as a first input the output signal from said discriminating means (2), and a counting section (5) for determining the video content of each successive line being transmitted and producing an output which is indicative of the video content of each line being transmitted and which is provided as a second input to the reading control section (4), said reading control section (4) producing an output to said reading section (3) to initiate the scanning of each line a predetermined period following initiation of the scanning of the previous line, said predetermined period being a function of the recording time for said previous line in said facsimile device on the receiving side.

2. A system as claimed in Claim 1, characterised in that said discriminating means of said signal transmitting side comprises a recording time discriminating section (2) receiving input data from said facsimile device on the receiving side which is indicative the minimum recording times of video lines as a function of their video content.

3. A system as claimed in Claim 2, characterised in that said recording time discriminating section (2) comprises an ROM having stored therein data on the respective minimum recording times for various receiving side facsimile devices as a function of equipment identification numbers.

**Patentansprüche**

1. Faksimile-Kommunikationssystem, bei dem die Nachrichtenübertragung so abläuft, daß, wenn die Zeit zur Übertragung eines einer Videozeile entsprechenden Videosignales, das durch Abtasten einer Vorlage gewonnen wurde, kürzer ist als die Zeit, die eine Faksimileeinrichtung empfangsseitig benötigt, Füll-Bits in Folge mit dem Videosignal übertragen werden, wodurch die Übertragungszeit jeder Zeile den Forderungen der Faksimileeinrichtung auf der Signalempfangsseite angepaßt wird; wobei das System aud der Signalübertragungsseite Mittel (2) aufweist zur Diskriminierung des Zeitabschnittes, der von der Faksimileeinrichtung auf der Signalempfangsseite benötigt wird, um das Videosignal für jede zu übertragende Zeile aufzuzeichnen; ein Leseteil (3), um eine Folge von zu übertragenden Vorlagezeilen abzutasten; ein Kodierteil (6) zur Übertragung dieses Videosignales und Mittel (4, 5), die geeignet sind zur Initiierung der Abtastung jeder Zeile und zur Verwendung des durch Diskriminieren gewonnenen, der minimalen Übertragungszeit entsprechenden Zeitabschnittes, dadurch gekennzeichnet, daß diese diskriminierenden Mittel (2) derart ausgebildet sind, daß sie die Zeit, die notwendig ist, um das Videosignal für jede zu übertragende Zeile aufzuzeichnen, als Funktion ihres Bildgehaltes gewinnen, wobei diese initiierenden Mittel (4, 5) ein Lesesteuerungsteil (4) aufweisen, dessen erster Eingang mit dem Ausgangssignal der diskriminierenden Mittel (2) beaufschlagbar ist; weiters eine Zähleinrichtung (5) zur Bestimmung des Bildinhaltes von jeder der in Folge zu übertragenden Zeilen und zur Erzeugung eines Ausgangssignales, das dem Bildinhalt jeder zu übertragenden Zeile entspricht, und womit ein zweiter Eingang des Lesesteuerungssteiles (4) beaufschlagbar ist, wobei dieser Lesesteuerungssteil (4) für das Leseteil (3) ein Ausgangssignal generiert, das zur Initiierung der Abtastung jeder Folgezeile nach einem vorgegebenen Zeitabschnitt nach der Initiierung der Abtastung der vorherigen Zeile dient, wobei dieser vorgegebene Zeitabschnitt eine Funktion der Aufzeichnungszeit dieser vorherigen Zeile in der empfangsseitigen Faksimileeinrichtung ist.

2. Faksimilesystem nach Anspruch 1, dadurch gekennzeichnet, daß die diskriminierenden Mittel auf der Signalübertragungsseite einen die Aufzeichnungszeit diskriminierenden Teil (2) aufweisen, der Eingangssignale von der empfangsseitigen Faksimileeinrichtung empfängt, die den minimalen Aufzeichnungszeiten der Videozeilen als Funktion ihres Bildinhaltes entsprechen.

3. Faksimilesystem nach Anspruch 2, dadurch gekennzeichnet, daß dieser die Aufzeichnungszeit diskriminierende Teil (2) ein ROM enthält, in dem Daten über die entsprechenden minimalen Aufzeichnungszeiten für verschiedene empfangsseitige Faksimileeinrichtungen als Funktion der Gerätesachnummern gespeichert sind.

**Revendications**

1. Système de télécopie dans lequel la transmission s'effectue de telle manière que lorsque le temps de transmission du signal vidéo pour une ligne vidéo, signal qui est obtenu par le balayage d'une image d'original, et plus court que le temps d'enregistrement nécessaire à un télécopieur recevant le signal, des bits de remplissage successifs sont transmis avec le signal vidéo, de sorte que le temps de transmission de chaque ligne est adapté à celui nécessaire au télécopieur récepteur, ce système comprenant, côté émission du signal, un dispositif discriminateur (2) pour déterminer la période de temps nécessaire au télécopier récepteur à l'enregistrement du signal vidéo pour chaque ligne à transmettre, une section de lecture (3) pour balayer des lignes successives d'un original à transmettre, une section de codage (6) pour transmettre ledit signal vidéo et un dispositif (4, 5) pour déclencher le balayage de chaque ligne et qui utilise la période de temps déterminée comme le temps de transmission minimum, caractérisé en ce que le dispositif discriminateur (2) détermine la période de temps nécessaire à l'enregistrement du signal vidéo, pour chaque ligne à transmettre, comme une fonction du contenu vidéo de la ligne et le dispositif déclencheur (4, 5) comprend une section de commande de lecture (4) recevant, en tant que premier signal d'entrée, le signal de sortie du dispositif discriminateur (2), ainsi qu'une section de comptage (5) pour déterminer le contenu vidéo de chacune des lignes transmises successivement et pour produire un signal de sortie qui est représentatif du contenu vidéo de chaque ligne transmise et qui est appliqué en tant que second signal d'entrée à la section de commande de lecture (4), laquelle délivre par sa sortie un signal à la section de lecture (3) pour commencer le balayage de chaque ligne une période prédéterminée après le commencement du balayage de la ligne précédente, cette période prédéterminée étant fonction du temps d'enregistrement de la ligne précédente par le télécopier récepteur.

2. Système selon la revendication 1, caractérisé en ce que le dispositif discriminateur côté émission comprend une section de discrimination (2), pour déterminer le temps d'enregistrement, qui reçoit, du télécopieur récepteur, des informations indiquant les temps d'enregistrement minimums de lignes vidéo en fonction de leur contenu vidéo.

3. Système selon la revendication 2, caractérisé en ce que la section de discrimination (2) comprend une mémoire morte (ROM) dans laquelle sont mémorisées des informations concernant les temps d'enregistrement minimums pour différents télécopieurs récepteurs, la mémorisation étant réalisée d'après les numéros d'identification de ces télécopieurs.

## FIG. 1

$\ell_1$

$\ell_2$

$\ell_3$

0  25  100
BLACK RATE  (%)

## FIG. 2

FACSIMILE
ON REC. SIDE

2

REC. TIME
DISCR.
SEC.

7

6

CODING
SECTION

10

12

8

4

READING
CONTROL
SECTION

11

5

BLACK BIT
COUNTING
SECTION

9

3

READING
SECTION

13